**Europäisches Patentamt**

**European Patent Office**

**Office européen des brevets**

(19)

(11) Numéro de publication : **0 112 734**
**B1**

(12) # FASCICULE DE BREVET EUROPÉEN

(45) Date de publication du fascicule du brevet :
27.05.87

(51) Int. Cl.⁴ : **H 04 M 3/56**

(21) Numéro de dépôt : **83402190.9**

(22) Date de dépôt : **10.11.83**

(54) **Dispositif d'interconnexion de lignes de transmission notamment de lignes téléphoniques, utilisant des amplificateurs différentiels.**

(30) Priorité : **18.11.82 FR 8219328**

(43) Date de publication de la demande :
**04.07.84 Bulletin 84/27**

(45) Mention de la délivrance du brevet :
**27.05.87 Bulletin 87/22**

(84) Etats contractants désignés :
**BE DE GB NL**

(56) Documents cités :
**FR-A- 2 120 248**
**FR-A- 2 312 145**
**PROCEEDINGS OF THE NATIONAL ELECTRONIC
CONFERENCE, vol. 25, 8-10 décembre 1969, pages
580-582. E. T. COWDEN et al.: "A high grade switchable 4-wire conference circuit"**

(73) Titulaire : **Laroche, Jean-Louis**
**139 Le Centaure 48, rue d'Erevan**
**F-92130 Issy Les Moulineaux (FR)**

**Parrain, Jean-Michel**
**5, rue Lucien Voilin**
**F-92800 Puteaux (FR)**

(72) Inventeur : **Laroche, Jean-Louis**
**139 Le Centaure 48, rue d'Erevan**
**F-92130 Issy Les Moulineaux (FR)**
Inventeur : **Parrain, Jean-Michel**
**5, rue Lucien Voilin**
**F-92800 Puteaux (FR)**

(74) Mandataire : **Mongrédien, André et al**
**c/o BREVATOME 25, rue de Ponthieu**
**F-75008 Paris (FR)**

# 0 112 734

## Description

La présente invention a pour objet un dispositif d'interconnexion de lignes de transmission, notamment de lignes téléphoniques. Elle trouve une application en audioconférence, qui est, comme on sait, une téléconférence dans laquelle les participants sont reliés par des circuits téléphoniques assurant la transmission de la parole.

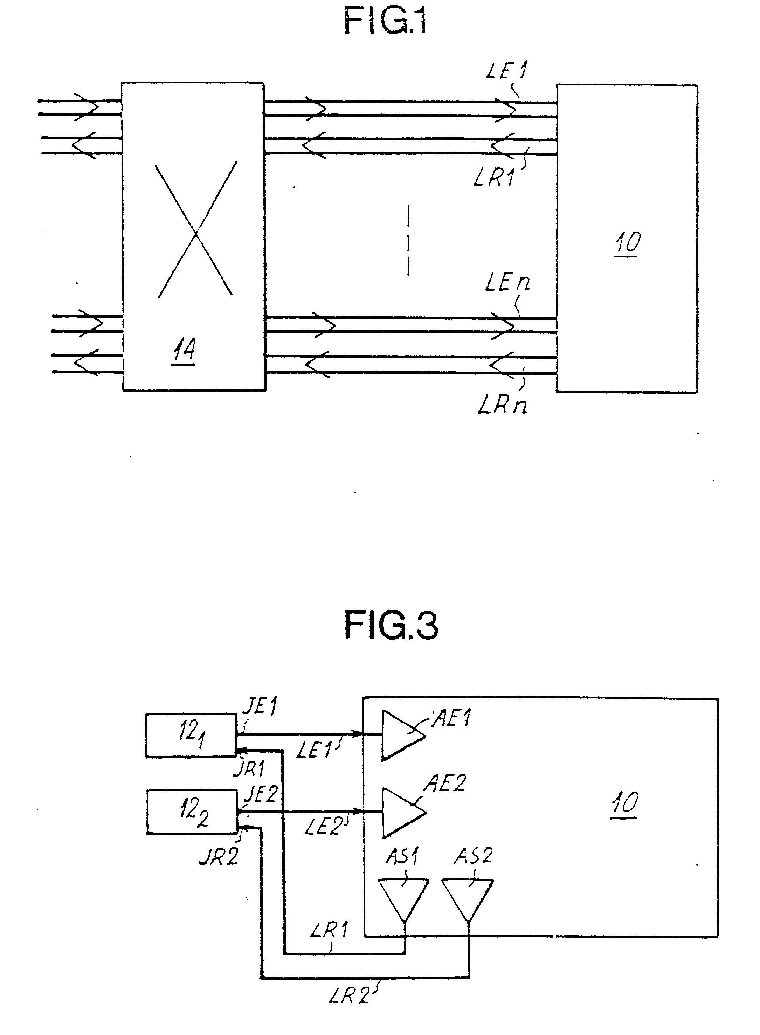

Une structure possible pour un équipement d'audioconférence est illustrée sur la figure 1. Chaque participant dispose d'une ligne téléphonique à deux fils. Cette ligne est transformée, en un point quelconque entre l'abonné et le centre de transit 14, en une ligne dite 4 fils comprenant une ligne d'émission et une ligne de réception. Ces lignes sont notées respectivement LE1, LE2, ... LEn et LR1, LR2, ... LRn, où n désigne le nombre de participants. Le centre de transit 14 a pour fonction de mettre en continuité la ligne 4 fils d'un abonné désirant participer à une téléconférence avec l'une des n lignes de 4 fils connectées à l'équipement de téléconférence. Ces lignes sont interconnectées dans un circuit 10 dénommé par la suite équipement de mise en commun. Le but de cet équipement est d'introduire sur la ligne de réception d'un des participants les signaux véhiculés par les lignes d'émission propres aux autres participants.

La principale difficulté de mise en œuvre de l'audioconférence se situe dans la réalisation de l'équipement de mise en commun des lignes, à savoir le circuit 10.

Le seul système d'audioconférence actuellement installé en France comprend un équipement de mise en commun constitué d'amplificateurs dont l'entrée est reliée à des diodes d'écrêtage.

Ce système présente de nombreux défauts, parmi lesquels on peut citer :
— une non-linéarité due à la présence de ces diodes d'écrêtage ;
— une distorsion d'affaiblissement importante (5 dB) en dessous du seuil d'écrêtage ;
— une mauvaise adaptation d'impédance des accès (le coefficient de réflexion atteint une valeur de 80 % dans la bande 300-3 400 Hz) ;
— une valeur trop faible de l'écart diaphonique entre systèmes voisins d'audiofréquence (31 dB) environ), bien inférieure à la valeur préconisée habituellement en télécommunications.

Ces défauts se traduisent par une mauvaise qualité de l'audition, ajoutée au fait que les conversations échangées sur un dispositif d'audiofréquence sont perceptibles sur un dispositif voisin.

D'autres systèmes d'audiofréquence ont été envisagés, qui sont basés sur le principe d'une commutation de la parole. De tels systèmes utilisent un explorateur à balayage rapide, qui examine, de manière cyclique, les signaux appliqués aux accès du système et qui les compare à un seuil donné. Lorsqu'un signal dépasse le seuil, il est envoyé vers l'ensemble des participants (sauf vers celui qui l'a émis) jusqu'à ce que son niveau retombe en-dessous du seuil. L'explorateur recherche ensuite un nouveau signal supérieur au seuil.

Ce type de matériel présente encore des inconvénients car il introduit un effet de hachage qui est préjudiciable au confort d'écoute.

On connaît encore, par le document FR-A-2 312 145, un circuit interface permettant l'interconnexion d'une voie de communication. Ce circuit comprend deux groupes d'amplificateurs, l'un d'entrée et l'autre de sortie. La présente invention reprend cette disposition mais en simplifiant grandement les moyens d'interconnexion des amplificateurs, en supprimant notamment les sources de courant et certains composants utilisés selon le document cité.

Le problème que résout l'invention est en fait plus large que celui de l'audioconférence. Il s'agit de manière générale, d'établir une interconnexion entre un premier groupe de n lignes de transmission, portant les messages émis, et un second groupe de n autres lignes de transmission, portant les messages reçus, de telle manière qu'on retrouve sur chaque ligne du second groupe d'une part les signaux véhiculés par toutes les lignes du premier, sauf par celle qui a le même rang que la ligne du second groupe considérée, et d'autre part, le signal véhiculé par la ligne du premier groupe de même rang que la ligne du second groupe considérée, avec un gain ajustable simplement, y compris à une valeur nulle. Un tel dispositif peut être utilisé pour interconnecter plusieurs terminaux afin que soient distribuées les informations émises par chacun d'eux vers tous les autres. Les signaux véhiculés peuvent être très divers : signaux de données, signaux vocaux et/ou musicaux, etc... Les lignes de transmission interconnectées par l'équipement peuvent avoir des caractéritisques d'impédance et de niveau du signal transmis différentes d'une ligne à l'autre.

Tous ces buts sont atteints, selon l'invention, par l'utilisation d'une famille d'amplificateurs différentiels.

De façon plus précise, l'invention a pour objet un dispositif d'interconnexion entre un premier groupe de n lignes de transmission, n étant un entier supérieur à 1, transportant des messages émis et un second groupe de n autres lignes de transmission transportant des messages reçus, ce dispositif comprenant un premier groupe de n amplificateurs d'entrée ayant chacun une entrée reliée à l'une des lignes du premier groupe et une sortie, et un second groupe de n amplificateurs de sortie ayant chacun une sortie reliée à l'une des lignes du second groupe caractérisé par le fait que les n amplificateurs de sortie du second groupe sont des amplificateurs différentiels à deux entrées, l'une inverseuse et l'autre non inverseuse, la sortie de chaque amplificateur du premier groupe étant reliée à travers une résistance à toutes les entrées non inverseuses des amplificateurs différentiels du second groupe, la sortie de chaque amplificateur du premier groupe ayant un rang déterminé étant par ailleurs reliée directement à l'entrée inverseuse de l'amplificateur différentiel de même rang.

Les caractéristiques de l'invention apparaîtront mieux après la description qui suit, d'un exemple de réalisation donné à titre explicatif et nullement limitatif. Cette description se réfère à des dessins annexés qui font suite à la figure 1 déjà décrite, et sur lesquels :

la figure 2 représente un mode de réalisation d'un dispositif d'interconnexion conforme à l'invention,

la figure 3 illustre un mode de raccordement du dispositif précédent avec les joncteurs téléphoniques présents en sortie du centre de transit,

la figure 4 représente le schéma équivalent de la charge connectée à la sortie de chaque amplificateur d'entrée,

la figure 5 représente le schéma de montage d'un amplificateur d'entrée,

la figure 6 représente le schéma de montage d'un amplificateur différentiel de sortie,

la figure 7 représente un module complet,

la figure 8 représente le schéma d'un module complet à entrées et sorties symétrisées.

La description qui va suivre porte sur un équipement de mise en commun de lignes téléphoniques mais, comme indiqué plus haut, l'invention s'applique à d'autres domaines où une interconnexion de lignes est utile. En outre, l'équipement qui va être décrit présente dix paires d'accès et l'audioconférence qu'il permet de mettre en œuvre touche ainsi dix participants ; mais ce nombre n'a évidemment aucun caractère limitatif, le nombre de lignes interconnectées pouvant être quelconque. Enfin, il faut observer que les figures annexées présentent le plus souvent chaque ligne sous forme d'un trait unique bien qu'en pratique cette ligne soit constituée par une paire de fils.

L'équipement représenté sur la figure 2 comprend un premier groupe de dix amplificateurs, dits amplificateurs d'entrée, AE1, AE2 ... AE10 et un second groupe de dix amplificateurs, dits amplificateurs de sortie, AS1, AS2 ... AS10. L'entrée des premiers est reliée aux lignes d'émission LE1 ... LE10 et la sortie des seconds aux lignes de réception LR1 ... LR10.

Les amplificateurs de sortie sont de type différentiel et, à ce titre, ils comprennent chacun une entrée inverseuse (repérée sur les schémas par le signe −) et une entrée non inverseuse (repérée par le signe +). La sortie de chaque amplificateur d'entrée est reliée à toutes les entrées non inverseuses des amplificateurs différentiels par une résistance, respectivement R1, R2 ... R10, de préférence toutes égales. Par ailleurs, la sortie d'un amplificateur d'entrée d'un certain rang est reliée directement à l'entrée inverseuse de l'amplificateur différentiel de même rang par une résistance réglable.

Le fonctionnement de ce circuit est le suivant : l'entrée non inverseuse de chaque amplificateur différentiel reçoit la somme des signaux délivrés par les amplificateurs d'entrée, y compris le signal délivré par l'amplificateur d'entrée ayant le même rang. Mais l'entrée inverseuse reçoit ce dernier signal, ajusté, dans le cas de l'application téléphonique, au moyen de la résistance réglable correspondante, à la même amplitude que celle du signal entrant sur l'entrée non inverseuse. L'amplificateur de sortie de rang $i$ délivre un signal de sortie $sr_i$ qui, en définitive, contient tous les signaux d'entrées $se_j$ excepté celui de même rang, c'est-à-dire le signal de rang $j = i$. Ceci peut s'exprimer par la relation

$$sr_i = \sum_{j}^{n} (se_j) - se_i$$

soit

$$sr_i = \sum_{j}^{n} se$$

qui est bien la condition requise pour une audioconférence.

Le raccordement d'un tel équipement avec les joncteurs téléphoniques du centre de transit 14 s'effectue comme illustré sur la figure 3, sous réserve que les accès de l'équipement soient symétrisés, comme on le verra plus loin. Chaque joncteur possède un accès d'émission JE1, JE2, etc... et un accès de réception JR1, JR2, etc... Les accès d'émission et de réception des joncteurs sont connectés respectivement à l'entrée de l'amplificateur d'entrée et à la sortie de l'amplificateur de sortie ayant le même rang que le joncteur en question. L'accès JE1 est donc relié à l'entrée de l'amplificateur AE1 et l'accès JR1 à la sortie de l'amplificateur AS1, etc...

Un tel circuit satisfait bien aux conditions imposées par l'audioconférence puisque, à condition que l'impédance de sortie de chacun des amplificateurs d'entrée soit faible devant la charge connectée, le signal de conversation en provenance de la paire « émission » d'un circuit n'est pas réinjecté sur la paire « réception » de ce même circuit, alors qu'il est diffusé sur les paires « réception » de tous les autres circuits.

Pour préciser davantage les différents éléments du montage, on notera dans la suite :

3

— R la valeur commune des résistances de connexion entre amplificateurs d'entrée et amplificateurs de sortie,

— ZSAE l'impédance de sortie d'un amplificateur d'entrée,

— ZEAS l'impédance d'entrée présentée par l'entrée inverseuse d'un amplificateur de sortie,

— ZEAS(+) ou Z l'impédance d'entrée présentée par l'entrée non inverseuse d'un amplificateur de sortie. Si nécessaire, on notera $ZEAS_n(+)$ l'impédance d'entrée présentée par l'entrée non inverseuse de l'amplificateur de sortie de rang n.

Pour un bon fonctionnement du dispositif on doit avoir ZSAE très petit devant R, ce qui revient à dire que chaque amplificateur d'entrée est une source de tension idéale vis-à-vis de la charge qui lui est connectée.

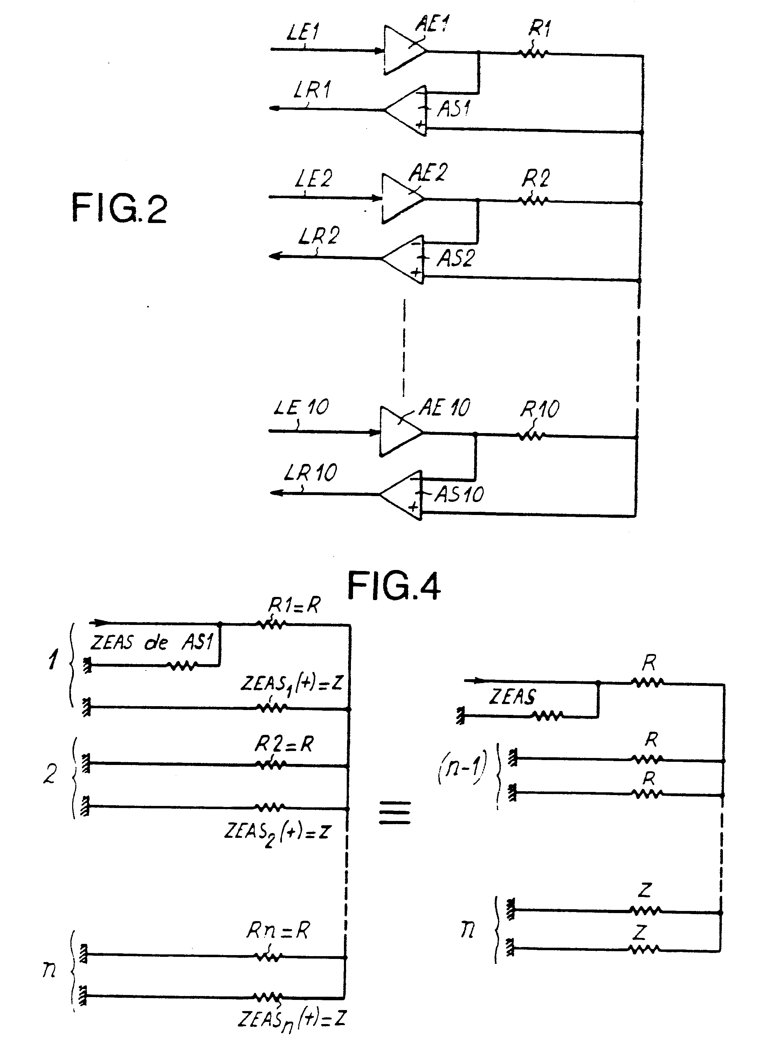

La charge connectée à la sortie de chaque amplificateur d'entrée, (par exemple à la sortie du premier AE1, la situation étant la même pour les autres) est représentée sur la figure 4. Cette charge est constituée par la mise en parallèle de ZEAS et d'un dipôle résultant de la mise en série d'une résistance R, de (n — 1) résistances R en parallèle et de n impédances Z représentant les impédances ZEAS(+). Un schéma équivalent est donné sur la partie droite de la figure 4.

Un calcul classique donne, pour cette charge Rc :

$$Rc = \frac{nR \cdot ZEAS\,(R - Z)}{(R + Z)\,nR + ZEAS\,[nR + (n - 1)Z]}$$

L'affaiblissement entre la sortie de l'amplificateur d'entrée de rang i et l'entrée d'un amplificateur de sortie de rang j, avec j ≠ i, est calculable à partir du rapport entre la tension VS apparaissant à l'entrée d'un amplificateur de sortie et la tension VE apparaissant à la sortie d'un amplificateur d'entrée de rang différent. Ce rapport est égal à :

$$\frac{VS}{VE} = \frac{1}{n} \times \frac{Z}{Z + R}$$

D'autres spécifications, propres au cahier des charges, peuvent être prises en compte, en fixant une impédance nominale des accès à 600 Ohms et un affaiblissement de 0 dB entre une entrée de rang i et une sortie de rang j (avec j ≠ i).

Ces conditions imposent donc :

— une impédance d'entrée de chaque amplificateur d'entrée égale à 600 Ohms,

— une impédance de sortie de chaque amplificateur de sortie égale à 600 Ohms,

— une valeur égale à 1 pour le produit du gain d'un amplificateur d'entrée, du gain entre sortie d'un amplificateur d'entrée et entrée d'un amplificateur de sortie et du gain d'un amplificateur de sortie.

On peut enfin prendre en compte une contrainte permettant de déterminer les gains des amplificateurs afin que, pour un même gain global de la chaîne amplificateur d'entrée-réseau de connexion-amplificateur de sortie, le niveau du signal d'entrée puisse atteindre une valeur maximale, sans qu'apparaissent des phénomènes de saturation ou de distorsion dans la chaîne d'amplification.

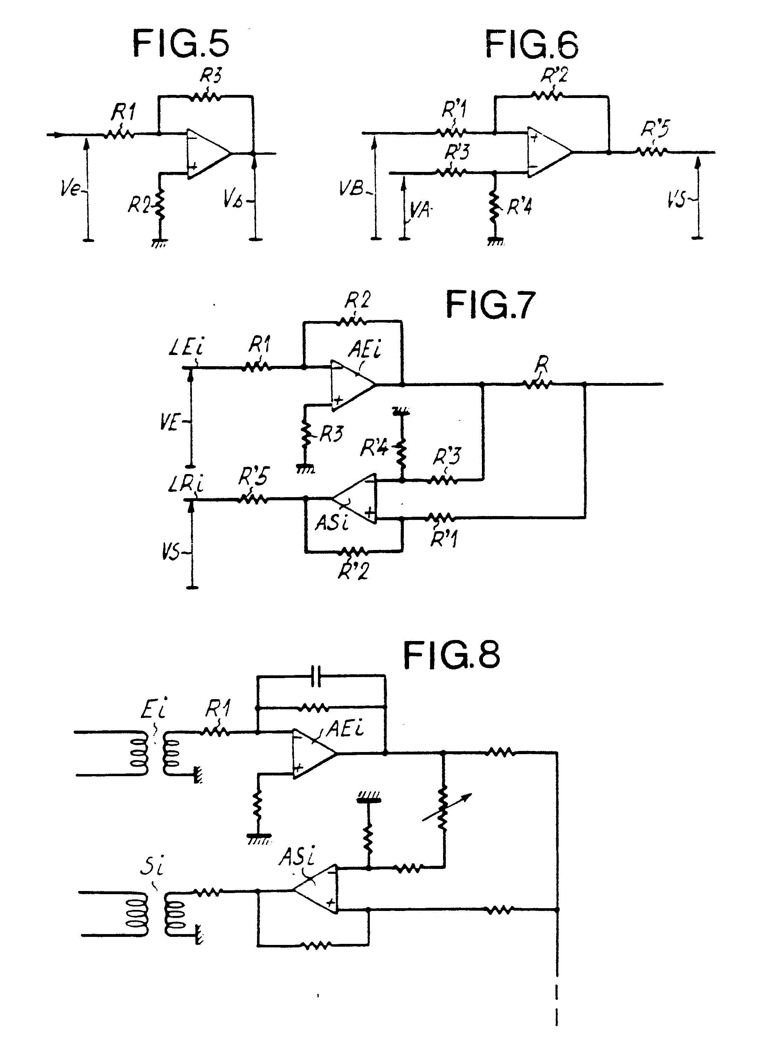

Toutes les données sont alors fixées pour établir un schéma des amplificateurs d'entrée et de sortie. Ces amplificateurs peuvent être construits à l'aide de circuits intégrés linéaires montés en amplificateurs-inverseurs, comme illustré sur la figure 5, pour ce qui concerne les amplificateurs d'entrée et de circuits intégrés linéaires montés en amplificateurs différentiels, comme illustré sur la figure 6, pour ce qui concerne les amplificateurs de sortie. Chaque amplificateur d'entrée comprend une entrée inverseuse (—) reliée à une première résistance de valeur R1, une entrée non-inverseuse (+) reliée à une masse à travers une deuxième résistance de valeur R2, la sortie de l'amplificateur étant reliée à l'entrée inverseuse à travers une troisième résistance de valeur R3. Les valeurs R1, R2, R3 sont reliées par :

$$R2 = \frac{R1\,R3}{R1 + R3}$$

l'impédance d'entrée d'un tel amplificateur d'entrée, soit ZEAE, est alors peu différente de R1 et ZSAE est peu différente de 0. En désignant par Vs et Ve les tensions de sortie et d'entrée on a :

$$\frac{Vs}{Ve} = - \frac{R3}{R1} \,.$$

indépendamment de la charge mise en sortie de cet amplificateur, pourvu qu'elle soit assez grande devant ZSAE, la tension de sortie Vs étant la tension d'entrée VE définie plus haut.

Pour avoir une impédance d'entrée de 600 Ω on prendra R1 = 600 Ω.

Chaque amplificateur de sortie comprend, comme illustré sur la figure 6, une entrée non-inverseuse (+) reliée à une résistance R'1 et à la sortie par une résistance R'2, une entrée inverseuse (—) reliée à un accès par une résistance réglable R'3 et à une masse par une résistance R'4. La sortie est reliée à une résistance R'5. La tension VA correspond à la tension de sortie de l'amplificateur d'entrée de même rang et la tension VB à la tension provenant de toutes les sorties des amplificateurs d'entrée. On a alors

$$VS = VB \frac{R'2}{R'1} - VA \left( \frac{R'4}{R'3 + R'4} \right) \left( \frac{R'1 - R'2}{R'1} \right)$$

L'impédance ZEAS(—) ou encore Z, présentée par l'entrée inverseuse où est appliquée la tension VB a pour expression, en désignant par iB le courant injecté à cet accès :

$$Z = \left( \frac{VB}{iB} \right) \simeq R'1 \frac{1}{1 - \frac{VA}{VB} \frac{R'4}{R'3 + R'4}}$$

La figure 7 représente un module de rang i conforme à cette réalisation, n modules de ce type (i de 1 à n) devant être mis en parallèle.

Pour ne trouver aucune tension VS à la sortie d'un tel module quel que soit VE, on doit donc avoir :

$$VA \left( \frac{R'4}{R'3 + R'4} \right) \left( \frac{R'1 + R'2}{R'1} \right) = VB \frac{R'2}{R'1}.$$

L'ensemble des relations précédentes permet de définir les valeurs des différentes résistances R'1, R'2, R'3 et R'4 de l'amplificateur de sortie. La résistance R'5 ne sert qu'à ajuster la valeur de l'impédance de sortie à sa valeur nominale : 600 Ohms pour l'application téléphonique.

La figure 8 enfin représente le schéma d'un module dont les accès ont été rendus symétriques par des transformateurs 600 Ohms/600 Ohms notés Ei pour l'entrée et Si pour la sortie, et où la résistance réglable connectée à l'entrée inverseuse se compose d'une partie fixe et d'une partie ajustable, afin d'accroître la précision du réglage.

Pour d'autres applications que la mise en commun de lignes téléphoniques, le calcul des résistances de chacun des amplificateurs d'entrée et de sortie, ainsi que le choix des résistances reliant les amplificateurs d'entrée aux amplificateurs de sortie prendra en compte les caractéristiques d'impédance et de niveau du signal transmis par les lignes interconnectées et les conditions :
— de gain en tension entre les divers accès d'entrée et les divers accès de sortie ;
— du taux de réinjection sur chaque ligne de sortie du signal arrivant sur la ligne d'entrée de même rang ;
— d'absence de phénomènes de saturation induits par l'équipement dans les conditions normales de son utilisation prévue.

## Revendications

1. Dispositif d'interconnexion entre un premier groupe de n lignes de transmission (LE1, LE2 ... LEn), n étant un entier supérieur à 1, transportant des messages émis et un second groupe de n autres lignes de transmission (LR1, LR2 ... LRn) transportant des messages reçus, ce dispositif comprenant un premier groupe de n amplificateurs d'entrées (AE1, AE2, ... AEn) ayant chacun une entrée reliée à l'une des lignes du premier groupe et une sortie, et un second groupe de n amplificateurs de sortie (AS1, AS2, ... ASn) ayant chacun une sortie reliée à l'une des lignes du second groupe, caractérisé par le fait que les n amplificateurs de sortie du second groupe sont des amplificateurs différentiels à deux entrées, l'une inverseuse et l'autre non inverseuse, la sortie de chaque amplificateur du premier groupe étant reliée à travers une résistance à toutes les entrées non inverseuses des amplificateurs différentiels du second groupe, la sortie de chaque amplificateur du premier groupe ayant un rang déterminé étant par ailleurs reliée directement à l'entrée inverseuse de l'amplificateur différentiel de même rang.

2. Dispositif selon la revendication 1, caractérisé en ce que les éléments constitutifs des amplificateurs et les résistances qui les relient sont déterminés par cinq contraintes :
— la valeur de l'impédance d'entrée de l'équipement,
— la valeur de l'impédance de sortie de l'équipement,
— la valeur des gains totaux en tension de l'équipement pour tous les trajets possibles entre un accès d'entrée et un accès de sortie de rang différent,
— la valeur des gains totaux en tension de l'équipement pour tous les trajets possibles entre un accès d'entrée et un accès de sortie de même rang,
— l'absence de phénomènes de saturation induits par l'équipement dans les conditions normales d'utilisation.

3. Dispositif selon l'une quelconque des revendications 1 à 2, caractérisé en ce que les lignes de transmission sont des lignes téléphoniques, le dispositif permettant une audioconférence entre n participants.

4. Dispositif selon l'une quelconque des revendications 1 à 3, caractérisé en ce que les éléments constitutifs des amplificateurs et les résistances qui les relient sont déterminés par les cinq contraintes :
— impédance d'entrée 600 $\Omega$,
— impédance de sortie 600 $\Omega$,
— gain total en tension de l'équipement égal à 1 pour tous les trajets entre un accès d'entrée et un accès de sortie de rang différent,
— gain total en tension de l'équipement égal à 0 pour tous les trajets entre un accès d'entrée et un accès de sortie de même rang,
— absence de phénomènes de saturation pour des signaux téléphoniques.

5. Dispositif selon la revendication 1, caractérisé en ce qu'il comprend en outre un premier groupe de n transformateurs de symétrisation ayant chacun un enroulement primaire à deux bornes, ces deux bornes étant reliées à deux fils constituant l'une des lignes de transmission du premier groupe et un second enroulement à deux bornes dont l'une est reliée à la masse et l'autre à l'entrée d'un des amplificateurs d'entrée du premier groupe, et un second groupe de n transformateurs de symétrisation ayant chacun un enroulement primaire à deux bornes dont l'une est reliée à la masse et l'autre à la sortie d'un des amplificateurs de sortie et un enroulement secondaire à deux bornes reliées à deux fils constituant l'une des lignes de transmission du second groupe.

6. Dispositif selon les revendications 1 et 2, caractérisé en ce que les éléments constitutifs des amplificateurs et les résistances qui les relient sont adaptés à des lignes pouvant avoir des caractéristiques d'impédance et de niveau du signal transmis différentes d'une ligne à l'autre, et satisfont de plus à des contraintes :
— de gain en tension entre les divers accès d'entrée et les divers accès de sortie de rang différent,
— de gamme de réglage du taux de réinjection sur chaque ligne de sortie du signal arrivant sur la ligne d'entrée de même rang,
— d'absence de phénomènes de saturation induits par le dispositif dans ses conditions prévues d'utilisation.

**Claims**

1. Device for interconnection between a first group of n transmission lines (LE1, LE2 ... LEn), n being an integer greater than 1, conveying messages issued and a second group of n other transmission lines (LR1, LR2 ... LRn) conveying messages received, this device comprising a first group of n input amplifiers (AE1, AE2 ... AEn) each having an input connected to one of the lines of the first group and an output, and a second group of n output amplifiers (AS1, AS2 ... ASn) each having an output connected to one the lines of the second group, characterized in that the n output amplifiers of the second group are differential amplifiers having two inputs, one inverting and the other non-inverting, the output of each amplifier of the first group being connected through a resistance to all the non-inverting inputs of the differential amplifiers of the second group, the output of each amplifier of the first group having a determined rank being moreover directly connected to the inverting input of the differential amplifier of the same rank.

2. Device according to Claim 1, characterized in that the components constituting the amplifiers and the resistances which connect them are determined by five constraints :
— the value of the input impedance of the equipment,
— the value of the output impedance of the equipment,
— the value of the total voltage gains of the equipment for all the possible paths between an input access point and an output access point of different rank,
— the value of the total voltage gains of the equipment for all the possible paths between an input access point and an output access point of the same rank,
— the absence of saturation phenomena induced by the equipment under the normal conditions of use.

3. Device according to any one of Claims 1 to 2, characterized in that the transmission lines are telephone lines, the device permitting an audio conference between n participants.

4. Device according to any one of Claims 1 to 3, characterized in that the components constituting the amplifiers and the resistances which connect them are determined by the five constraints :
— input impedance 600 $\Omega$,
— output impedance 600 $\Omega$,
— total voltage gain of the equipment equal to 1 for all the paths between an input access point and an output access point of different rank,
— total voltage gain of the equipment equal to 0 for all the paths between an input access point and an output access point of the same rank,
— absence of saturation phenomena for telephone signals.

5. Device according to Claim 1, characterized in that it further comprises a first group of symmetrization transformers each having a primary winding having two terminals, these two terminals being connected to two conductors constituting one of the transmission lines of the first group and a second winding having two terminals, one of which is connected to earth and the other to the input of one of the input amplifiers of the first group, and a second group of n symmetrization transformers each having a primary winding having two terminals, one of which is connected to earth and the other to the output of one of the output amplifiers and a secondary winding having two terminals connected to two conductors constituting one of the transmission lines of the second group.

6. Device according to Claims 1 and 2, characterized in that the components constituting the amplifiers and the resistances which connect them are adapted to lines which may have characteristics of impedance and of transmitted signal level which differ from one line to the other, and, in addition, satisfy constraints :

— of voltage gain between the various input access points and the various output access points of different rank,

— of range of control of the level of reinjection on each output line of the signal arriving on the input line of the same rank,

— of absence of saturation phenomena induced by the device under its intended conditions of use.

**Patentansprüche**

1. Vorrichtung zur Verbindung zwischen einer ersten Gruppe von n Fernmeldeleitungen (LE1, LE2, ... LEn), wobei n eine ganze Zahl größer 1 ist, die abgegebene Nachrichten führen, mit einer zweiten Gruppe von n weiteren Fernmeldeleitungen (LR1, LR2, ... LRn), die empfangene Nachrichten führen, wobei die Vorrichtung enthält : eine erste Gruppe von n Eingangsverstärkern (AE1, AE2, ... AEn) mit jeweils einem Eingang, der mit einer der Leitungen der ersten Gruppe verbunden ist, und einem Ausgang, und eine zweite Gruppe von n Ausgangsverstärkern (AS1, AS2, ... ASn), die jeweils einen mit einer der Leitungen der zweiten Gruppe verbundenen Ausgang haben, gekennzeichnet durch die Tatsache, daß die n Ausgangsverstärker der zweiten Gruppe Differenzverstärker mit zwei Eingängen sind, einer invertierenden Eingang und einem nicht-invertierenden Eingang, wobei der Ausgang von jedem Verstärker der ersten Gruppe über einen Widerstand mit allen nicht-invertierenden Eingängen der Differenzverstärker der zweiten Gruppe verbunden ist, der Ausgang eines jeden Verstärkers der ersten Gruppe eines bestimmten Rangs darüber hinaus direkt mit dem invertierenden Eingang des Differenzverstärkers desselben Rangs verbunden ist.

2. Vorrichtung nach Anspruch 1, dadurch gekennzeichnet, daß die Elemente, die die Verstärker bilden, und die Widerstände, die sie verbinden, durch fünf Bedingungen bestimmt sind :

— die Größe der Eingangsimpedanz der Gesamtinstallation,

— die Größe der Ausgangsimpedanz der Gesamtinstallation,

— die Größe der gesamten Spannungsverstärkungen der Gesamtinstallation für alle möglichen Wege zwischen einem Eingangsanschluß und einem Ausgangsanschluß unterschiedlichen Rangs,

— die Größe der Gesamtspannungsverstärkungen der Gesamtinstallation für alle möglichen Wege zwischen einem Eingangsanschluß und einem Ausgangsanschluß desselben Rangs,

— die Abwesenheit von Sättigungserscheinungen, die durch die Gesamtinstallation unter normalen Benutzungsbedingungen hervorgerufen werden.

3. Vorrichtung nach einem der Ansprüche 1 und 2, dadurch gekennzeichnet, daß die Übertragungsleitungen Telefonleitungen sind, wobei die Vorrichtung eine Konferenzschaltung zwischen n Teilnehmern gestattet.

4. Vorrichtung nach einem der Ansprüche 1 bis 3, dadurch gekennzeichnet, daß die Elemente, die die Verstärker bilden, und die Widerstände, die sie verbinden, durch die fünf Bedingungen bestimmt sind :

— Eingangsimpedanz 600 $\Omega$,

— Ausgangsimpedanz 600 $\Omega$,

— Gesamtspannungsverstärkung der Gesamtinstallation gleich 1 für alle Wege zwischen einem Eingangsanschluß und einem Ausgangsanschluß unterschiedlichen Rangs,

— Gesamtspannungsverstärkung der Gesamtinstallation gleich 0 für alle Wege zwischen einem Eingangsanschluß und einem Ausgangsanschluß desselben Rangs,

— Abwesenheit von Sättigungserscheinungen für Telefonsignale.

5. Vorrichtung nach Anspruch 1, dadurch gekennzeichnet, daß sie weiterhin eine erste Gruppe von n Symmetriertransformatoren enthält, die jeweils eine Primärwicklung mit zwei Klemmen aufweisen, wobei diese zwei Klemmen mit zwei Drähten verbunden sind, die die eine der Übertragungsleitungen der ersten Gruppe bilden, und eine zweite Wicklung mit zwei Klemmen aufweist, von denen die eine mit Masse und die andere mit dem Eingang eines der Eingangsverstärker der ersten Gruppe verbunden ist, und daß sie eine zweite Gruppe von n Symmetriertransformatoren enthält, die jeweils eine Primärwicklung mit zwei Anschlüssen aufweisen, von denen der eine mit Masse und der andere mit dem Ausgang eines der Ausgangsverstärker verbunden ist, und eine Sekundärwicklung aufweisen mit zwei Klemmen, die mit zwei Drähten verbunden sind, die eine der Übertragungsleitungen der zweiten Gruppe bilden.

6. Vorrichtung nach den Ansprüchen 1 und 2, dadurch gekennzeichnet, daß die Elemente, die die Verstärker bilden, und die Widerstände, die sie verbinden, an Leitungen angepaßt sind, die von einer Leitung zur anderen unterschiedliche Impedanzcharakteristika und Übertragungssignalpegel aufweisen und darüber hinaus folgende Bedingungen erfüllen :

— Spannungsverstärkung zwischen den verschiedenen Eingangsanschlüssen und den verschiedenen Ausgangsanschlüssen von unterschiedlichem Rang,

— Regelbereich für den Rückkopplungsgrad auf jede Ausgangsleitung von dem auf der Eingangsleitung des gleichen Rangs ankommenden Signal,

— Abwesenheit von Sättigungserscheinungen, die durch die Vorrichtung in ihren vorgesehenen Benutzungsbedingungen hervorgerufen werden.

# FIG.1

# FIG.3

FIG.2

FIG.4

# FIG.5

# FIG.6

# FIG.7

# FIG.8

3